Europäisches Patentamt

(19) European Patent Office

Office européen des brevets

(11) EP 0 888 806 A2

(12) **EUROPEAN PATENT APPLICATION**

(43) Date of publication:
07.01.1999 Bulletin 1999/01

(51) Int. Cl.$^6$: **B01D 53/40**, B01D 53/62, D21H 17/00

(21) Application number: 98111833.4

(22) Date of filing: 26.06.1998

(84) Designated Contracting States:
AT BE CH CY DE DK ES FI FR GB GR IE IT LI LU MC NL PT SE
Designated Extension States:
AL LT LV MK RO SI

(30) Priority: 30.06.1997 IT VA970023

(71) Applicants:
• Geopolimeri S.r.l.
36028 Rossano Veneto, VI (IT)

• VOMM CHEMIPHARMA S.r.l.
20089 Rozzano MI (IT)

(72) Inventors:
• Nicolucci, Clemente
35028 Rossano Veneto (VI) (IT)
• Vezzani, Corrado
20089 Rozzano (Milano) (IT)
• Stragliotto, Flavio
36027 Rosa (VI) (IT)
• Postet, Piero
20089 Rozzano (Milano) (IT)

(54) **Preparation of inorganic flours from acid gases of combustion and alkaline industrial residuals**

(57) A process is disclosed for preparing inorganic flours used as an additive in the production of paper, board, card, rubber, water-paint, paints, by means of the reaction of the alkaline residuals of industrial processes with fossil-fuel combustion fumes.

EP 0 888 806 A2

## Description

The present invention refers to the conversion of waste products, both solid and gaseous, coming from various industrial processes and from the production of energy, into industrially useful products.

In particular, acid gases coming from the use of solid or gaseous fuels are made to react with alkaline waste products, both solid and liquid, having a content of over 2% in weight of calcium hydrate, such as ceramic slips, alkaline foams from iron and steel furnaces and residuals based on hydrates and earth alkaline oxides, such as those of calcium and aluminium.

In this way powdery solids, not very soluble in water, are obtained, and which in the present description will be called "smog flours".

The alkaline wastes used typically contain 60% +/- 25% in weight of oxides and hydrates of metals such as calcium, magnesium and aluminium.

In the preferred forms of the process according to the invention, the smog flours are obtained by continuous operation on thin layers in a continuous reactor which enables a rapid alternation of the exposed surfaces.

Particulary suitable is the thin layer continuous reactor marketed by Vomm S.r.l. and called "Turbofissatore" (Turbofixer).

The process according to the invention leads to the obtaining of inorganic fillers, without excess dilution water, usable in the production of paper and board as well as an inorganic filler in plastics, rubbers, panels, water paints and paints.

The name smog flour, in the present invention, also includes ground products obtained by means of neutralizing the acid gases of combustion of urban and industrial waste incinerators.

Constant research for the use of low-cost materials in paper-making, and particularly the waste matter of other productions, has already enabled several inventors to prepare processes, such as, for example, those described in the European patent applications N.645491 and 644293, for the use of materials of agro-industrial origin to partly or entirely replace the mineral fillers normally put in the paper, and even of a part of the wood-pulp itself.

The use of inorganic materials as a filler and as a coating in the paper industry is very extensive and mainly uses kaolin and calcium carbonate.

These minerals are extracted from quarries and mines with subsequent environmental-landscape problems, in addition to these being non-renewable raw materials.

The replacement of minerals or part of them with industrial wastes otherwise destined to be disposed of as waste in dumps, is therefore an operation of considerable importance not only from a financial standpoint but also from that of safeguarding the environment.

In the preferred forms of use for making paper from the products obtained according to the present invention, from 30% to 100% in weight of the inorganic mineral filler normally used for obtaining a certain type of paper is replaced without varying its physical-mechanical characteristics or those of use.

It is therefore immediately clear how use of the smog flours relative to the present invention represents a particularly advantageous process which offers not only a considerable reduction in the consumption of non-renewable mineral substances, by using carbon and sulfur instead of them which would otherwise be dispersed into the environment and thus polluting it, but also in lowering the content of acids in the atmosphere (sulfur dioxide and sulfur trioxide, nitrogen oxides, carbon dioxide) coming from combustion processes in general.

The process according to the invention also guarantees the cheapness of a smog flour which for quality and cost is comparable to the traditional inorganic fillers normally used in paper making.

When the acid gases and alkaline waste products are made to react together (as stated above), the main problem to be solved consists of a very modest yield of the reaction between the calcium hydrate and the carbon dioxide.

Due to the limited pressure of the carbon dioxide contained in the combustion gases (10.5 - 11.5% in volume) it cannot penetrate the solid particles of calcium hydroxide and therefore the desired reaction does not take place.

It was also noted that by operating with a single reaction stage, even with reaction times of more than one hour, there are carbon dioxide conversion yields lower than 5% and the calcium hydroxide cannot be converted into carbonate with yields above 80%.

The addition of water, both in the liquid state and the gaseous state, and the use of a high pressure in the combustion gases used, increases the conversion yield of the calcium hydroxide, but the costs of the process also increase, thus making it uneconomical.

Continuing the research made it possible to find reaction conditions that make its industrial use particularly advantageous.

In particular, it was found that by adding steam and/or water to the mixture of solids reacting, and working the reaction in two successive stages, the first with a steam content in the mixture of between 30% and 50% in weight and the second by reducing the water content in the final product to a value of less than 5% in weight, a conversion yield in calcium carbonate of 90% in the first stage and over 98% in the second stage, can be obtained.

The conversion yield of the carbon dioxide contained in the combustion gases used exceeds the value of 10% in weight.

The reaction temperatures of the two stages of reaction are between 50° and 250°C; the reaction times of the first stage are preferably between 5-15 minutes and those of the second between 10-30 min.

Therefore it is easy to appreciate the considerable importance of the process according to the present invention, which works with short reaction times and which gives an almost quantitative conversion yield of the calcium hydroxide contained in the alkaline waste products treating them with the combustion gases.

Operating with the "Turbofissatore" (Turbofixer) of Vomm S.r.l., alkaline material either of powdery nature and pasty nature, with a dry content of from 15% to 90% in weight, can be used.

For example, the residual slips of the ceramics sector (which have a dry-content of from 35% to 55%), or the liquid alkaline residuals (dry-content of from 15% to 35%) can be used.

The flowrate of alkaline residual is regulated in order to always guarantee an excess of exhaust gas, to shift the balance of the reaction towards the smog flour final product.

In the preferred forms of realizing the process according to the invention, the carbon dioxide content in the exhaust gases is not made to fall below 8% in volume.

The flowrate of the exhaust gases taken in by the "Turbofissatore" (Turbofixer) is controlled by a butterfly valve and can vary from 0 to 1200 Ncm/h.

The length of time of the alkaline reagents inside the reactor is regulated between 5 and 30 minutes.

The following examples illustrate the various operative conditions for obtaining a smog flour of good quality, which can be used both in the production of paper and board and also as an inorganic filler of plastics, rubbers, water paints and paints.

The tests described below were carried out using a "Turbofissatore" (Turbofixer), made from stainless steel AISI 304 and having the following characteristics: the central core is made up of a rotating shaft (turboagitator), with variable speed from 30 to 60 m/s, whereas the side wall is heated with diathermic oil which can reach a temperature of 300°C.

A series of blades screwed onto the rotating shaft guarantees the feed or holding of the material, as well as seeing to the removal and constant renewal of the thin layer of alkaline material which forms on the walls of the jacket.

The turboagitator guarantees best contact between the alkaline residuals and the acid gases, which enter at the head of the "Turbofissatore" (Turbofixer), passing through it in equicurrent.

A pneumatic carrier guaranteed by a fan situated upstream of the "Turbofissatore" (Turbofixer) allows constant exit of the alkaline material reacted and converted into neutral smog flour.

The smog flour in powder form is separated in a dust separator from the purified exhaust gas which, before being released in the atmosphere, passes through a sleeve filter for reducing the residual dusts.

In the case of smog flour in slurry (water-content variable from 40% to 80%) the reduction of the liquid occurs in a condensation reducer.

Rotary valves situated at the base of the cyclone and of the sleeve filter enable the smog flour product to be continuously discharged.

The "Turbofissatore" (Turbofixer) can be arranged to inject saturated steam at 3 bar (taken up to 150 kg./h.) in different points of the reaction chamber and more precisely at the exhaust gas intake and at three equidistant points of the reaction chamber.

The smog flour in powder form, drawn by a pneumatic system controlled by the fan installed downstream of the circuit, is reduced and discharged by a cyclone.

The smog flour in slurry (e.g. with a dry-content of from 20% to 65%) is stopped in a condensation reducer, installed at the outlet of the "Turbofissatore" (Turbofixer).

**Example 1:**

Production of smog flour from hydrated lime in powder form.

The initial material is hydrated lime $Ca(OH)_2$, ventilated, of very fine granulometry, less than 100 $\mu$m, with hydroxide strength of 96%.

The characteristics of the fumes coming from the steam plant are given in table 1.1.

TABLE 1.1

| Characteristics of the fumes being treated. | |
|---|---|
| Temperature of fumes: | 120°C |

TABLE 1.1 (continued)

| Characteristics of the fumes being treated. | |
| --- | --- |
| Volumetric flowrate of the fumes being treated | 500 Ncu.m./h |
| Volumetric concentration in percentage: | |
| $CO_2$ 11%; $H_2O$ 15%; $0_2$ 3%; $NO_x$ 100-200 ppm; CO: negligible; | |

The absence of $SO_x$ is the consequence of the use of natural gas as fuel.

The main reaction is the fixing of $CO_2$ according to the reaction:

$$Ca(OH)_2 + CO_2 \rightarrow CaCO_3 + H_2O.$$

The speed of the turboagitator is regulated in order to guarantee a residence time of 10 minutes of the reagent.

The flowrate of the alkaline reagent is regulated at 25 Kg./h.

Two distinct productions of 50 kg. are carried out.

The first production is carried out by recycling the outgoing product.

50 Kg. of hydrated lime are loaded in the reactor, subsequently regulating the flowrate to 25 Kg/h. and adjusting the thermostat to 120°C.

Operating for approximately 4 hours, 55 Kg of very fine smog flour are obtained with a calcium carbonate yield equal to 30% (see table 1.2).

In the second production, with the same quantity of hydrated lime, the thermostat is adjusted to 160°C and saturated steam is injected, at a pressure of 3 bar and with a flowrate of 50 Kg./h.

After 2 hours of production, 60 Kg of very fine smog flour are obtained with moisture-content below 2%, and a calcium carbonate yield of 50%.

In these conditions the yield of the process increases and the production times are reduced, to the advantage of a more economic final product.

TABLE 1.2

| Conditions and results of the productions of smog flour from calcium hydroxide. | | | | | | | | | |
| --- | --- | --- | --- | --- | --- | --- | --- | --- | --- |
| (A) | (B) | (C) | (D) | (E) | (F) | (G) | (H) | (I) | (L) |
| 1/1 | 500 | 120 | 60 | 85 | 25 | 10 | 120 | 4 | 30 |
| 1/2 | 500 | 120 | 80 | 85 | 25 | 10 | 160 | 4 | 50 |

in which:
(A) = example number
(B) = flowrate of the fumes in Ncm/h
(C) = temperature of the fumes in °C
(D) = temperature of the fumes exiting in °C
(E) = flowrate $CO_2$ in Kg/h.
(F) = flowrate $Ca(OH)_2$ in Kg/h.
(G) = length of time in minutes
(H) = temperature of "Turbofissatore" (Turbofixer) in °C
(I) = energy in kWh
(L) = yield in percentage of weight

**Example 2:**

Production of smog flour in powder form and in slurry from hydrated lime in slurry.

The initial alkaline material is hydrated lime in slurry at a dry-content of 30%.

Two productions are carried out in different conditions in order to obtain both smog flour in powder and smog flour in slurry.

Fumes coming from the same steam plant and with the same characteristics as those of example 1. are used.

In the first production (2.1) 60 Kg. of hydrated lime in slurry (30% dry content) at a flowrate of 40 Kg./h. are proportioned.

The "Turbofissatore" (Turbofixer) is thermostat-set at 50°C, to keep the product liquid, and the length of time is regulated to 15 min.

The outgoing product, still liquid and with a yield of 80%, is recycled in the "Turbofissatore" (Turbofixer) thermostat-set at 180°C and converted into a coarse smog flour with a calcium carbonate yield of 95%.

This coarse smog flour (with dryness below 1%) is ground and sifted in a micronizing mill, bringing the average dimensions of the flour to around 10 $\mu$m.

In the second production (2.2) 60 Kg of hydrated lime in slurry (30% dry) at a flowrate of 40 Kg/h. are proportioned. The production takes place in the same operative conditions as the previous production (see table 2.11).

The final product, however, is recycled in the "Turbofissatore" (Turbofixer) which is still thermostat-set at 50°C, in order to keep the outgoing product in slurry, also for the same reason a minimum reintegration (20 litres per hour) of water lost by evaporation is guaranteed.

The final product has a dry-content of 25% and a yield equal to 98-99%.

The chemical-physical characteristics (conversion 99%, pH 8.5, whiteness 86) are excellent for its use in paper production as an alternative to traditional inorganic fillers, or in water paints.

TABLE 2.1

| Conditions and results of the productions of smog flour from calcium hydroxide. | | | | | | | | | | |
|-----|-----|-----|-----|-----|-----|-----|-----|-----|-----|-----|
| (A) | (B) | (C) | (D) | (E) | (F) | (G) | (H) | (H1) | (I) | (L) |
| 2/1 | 500 | 120 | 40 | 85 | 40 | 15 | 50 | 180 | 4 | 95 |
| 2/2 | 500 | 120 | 40 | 85 | 40 | 15 | 50 | 50 | 4 | 99 |

in which:

(A) = example number
(B) = flowrate of the fumes in Ncm/h
(C) = temperature of the fumes in °C
(D) = temperature of the fumes exiting in °C
(E) = flowrate $CO_2$ in Kg/h.
(F) = flowrate $Ca(OH)_2$ in Kg/h.
(G) = length of time in min.
(H) = temperature Turbofissatore (Turbofixer) in °C - 1st passage
(H1) = temperature Turbofissatore (Turbofixer) in °C -2nd passage
(I) = energy in KWh
(L) = yield in percentage of weight

**Example 3:**

Production of smog flour in powder form and in slurry from depleted lime coming from the ceramic sector.

In the ceramic industry the system used for purifying the fumes of the tile-baking processes is without doubt the filter with fabric sleeve filter (synthetic fibres), prelined with an alkaline solid reagent (lime).

Reduction of the gaseous emissions is based on a process of absorption with chemical reaction, which brings about the fixing of all the gases of acid nature.

With its action depleted, the lime is thus made up of various salts, the commonest of which are sulfurs, sulphates, carbonates and calcium hydrates.

The depleted lime (slip) is an industrial waste product, to be disposed of and having considerable basic alkalinity.

In fact, it still contains percentages varying from 10% to 40% in weight of unreacted hydrated lime.

In the industrial test carried out, 100 Kg of depleted lime slip at a dry content of 60% were used.

The slip came from the working of porcelainized gres tiles and its elementary composition and in lime salt is given in table 3.1.

TABLE 3.1

Composition of depleted lime from the ceramic sector.

elements - % in weight:

TABLE 3.1 (continued)

Composition of depleted lime from the ceramic sector.

Ca 47%; Mg 0.3%; Na 0.5%; K O.3%; Al 0.4%; Si 0.4%;

F 26.8%; Cl 1.3%; C 2.6%; S 1.1%; =. H and others 19.3%.

Lime salts - % in weight:<

$Ca(OH)_2$ 18%; $CaCO_3$ 20%; $CaSO_4$ 4%; $CaF_2$ 53%; $CaCl_2$ 2%; others 2%.

The initial material was divided into two equal parts, in order to carry out two separate productions.

Fumes coming from the same steam plant and having the same characteristics as those of example 1. are used.
In the first production (3.1) 50 Kg of slip (60% dry content) at the flowrate of 30 Kg/h. are proportioned.
The "Turbofissatore" (Turbofixer) is thermostat-set at 160°C.
The length of time is regulated at 15 min.
As a final product 35 Kg of coarse smog flour with alkaline content (expressed as % of $Ca(OH)_2$) of less than 10% are obtained.

This coarse smog flour (with dryness below 1%) is ground and sifted in a micronizing mill, bringing the average dimensions of the flour to around 10 $\mu$m.

In the second production (3.2) 50 Kg of slip (60% dry) at a flowrate of 30 Kg./h. are proportioned.

The "Turbofissatore" (Turbofixer) is thermostat-set at 50°C, to keep the product liquid inside the "Turbofissatore" (Turbofixer), regulating the recovery (15 litres per hour) of water lost through evaporation.

The length of time is regulated at 15 min.

The final product is a pasty slip of similar aspect to that used in the intake, but with residual alkalinity below 2%.

The neutral product can be used in the paper industry instead of traditional inorganic fillers both in bulk and on the surface.

TABLE 3.2

| Conditions and results of the productions of smog flour from alkaline residuals of the ceramic industry. | | | | | | | | | |
|---|---|---|---|---|---|---|---|---|---|
| (A) | (B) | (C) | (D) | (E) | (F) | (G) | (H) | (I) | (L) |
| 3/1 | 500 | 120 | 80 | 85 | 30 | 15 | 160 | 4 | 10 |
| 3/2 | 500 | 120 | 40 | 85 | 30 | 15 | 50 | 4 | 2 |

in which:
(A) = example number
(B) = flowrate of the fumes in Ncm/h
(C) = temperature of the fumes in °C
(D) = temperature of the fumes exiting in °C
(E) = flowrate $CO_2$ in Kg/h.
(F) = alkaline residual flowrate in Kg/h.
(G) = length of time in min.
(H) = temperature Turbofissatore (Turbofixer) in °C
(I) = energy in KWh
(L) = residual alkalinity in % weight of $Ca(OH)_2$

**Claims**

1. Process for preparing an additive (called smog flour) for paper, board, plastic, rubbers, panels, water paints and paints characterized by the fact that alkaline industrial residuals, having a water-content of from 20 to 90% in weight and a calcium hydrate content of from 2 to 10% in weight are made to react with the combustion gases of steam plants and industrial activities in general, having a carbon dioxide content of usually between 10% and 12% in volume.

2. Process as claimed in claim 1. characterized by the fact that the reaction between the abovementioned alkaline industrial residuals and the abovementioned combustion gas is carried out in a "Turbofissatore" (Turbofixer) at a temperature of between 50° and 300°C.

3.  Process as claimed in claim 1. characterized by the fact that the reaction between the abovementioned alkaline industrial residuals and the abovementioned combustion gas is carried out by adding from 20% to 70% in weight of steam to the reaction mixture.

4.  Process as claimed in claim 1. characterized by the fact that the reaction between the abovementioned alkaline industrial residuals and the abovementioned combustion gas is carried out in two successive stages, the first with a steam-content in the mixture of between 30% and 50% in weight and the second by reducing the water-content in the final product to a value of less than 5% in weight.

5.  Process as claimed in claim 4. characterized by the fact that the reaction temperatures of the two reaction stages are between 50° and 250°C, the reaction time of the first stage is between 5-15 minutes and that of the second from 10-30 minutes.

6.  Smog flour having a calcium hydrate content of less than 3% in weight.

7.  Smog flour as claimed in claim 6. having a granulometry of less than 20 $\mu$m usable as an additive in the industries of paper-making, plastics, paints, water paints.

8.  Paper obtained from cellulose fibres added with a quantity of between 1% and 40% in weight of smog flour as claimed in claim 7.